(19) Europäisches Patentamt / European Patent Office / Office européen des brevets

(11) **EP 4 478 817 A1**

(12) **EUROPEAN PATENT APPLICATION**
published in accordance with Art. 153(4) EPC

(43) Date of publication:
**18.12.2024  Bulletin 2024/51**

(21) Application number: **23752443.4**

(22) Date of filing: **10.02.2023**

(51) International Patent Classification (IPC):
*H04W 72/12* (2023.01)

(52) Cooperative Patent Classification (CPC):
**H04W 28/02; H04W 72/044; H04W 72/12;
H04W 72/121; H04W 72/1263; H04W 72/542**

(86) International application number:
**PCT/CN2023/075462**

(87) International publication number:
**WO 2023/151665 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **11.02.2022  CN 202210130554**

(71) Applicant: **Spreadtrum Communications
(Shanghai) Co., Ltd.
Shanghai 201203 (CN)**

(72) Inventor: **ZHANG, Meng
Shanghai 201203 (CN)**

(74) Representative: **Mewburn Ellis LLP
Aurora Building
Counterslip
Bristol BS1 6BX (GB)**

(54) **POWER HEADROOM REPORTING METHOD AND RELATED APPARATUS**

(57)    A power headroom (PH) reporting method and a related apparatus are disclosed in the disclosure. The method is applied to a terminal device having two panels, where the two panels are capable of simultaneous uplink transmission in a first time unit, and the uplink transmission of any one of the two panels in the first time unit is intended for a first transmission and reception point (TRP) and/or a second TRP. The method includes the following. A first PH is calculated according to a first transmission power and a maximum transmission power of the terminal device, and a second PH is calculated according to the maximum transmission power and a second transmission power. Control signaling that contains the first PH and the second PH is sent. With this disclosure, a PH can be determined and reported for the case of simultaneous multi-panel uplink transmission for multiple TRPs (M-TRPs), so that a network device can flexibly schedule resources.

FIG. 6

EP 4 478 817 A1

**Description**

TECHNICAL FIELD

This disclosure relates to the field of communication, and in particular, to a power headroom (PH) reporting method and a related apparatus.

BACKGROUND

Power headroom (PH) refers to a power difference between a maximum transmission power allowed for a user equipment (UE) and a currently-evaluated transmission power of a physical uplink shared channel (PUSCH), which can be simply represented by the formula PH=UEAllowedMaxTransPower-PUSCHPower. The PH represents how much transmission power the UE can use in addition to the transmission power used for current PUSCH transmission. Similarly, PH for a physical uplink control channel (PUCCH) can be simply represented by the formula PH=UEAllowedMaxTransPower-PUCCHPower.

In a high-frequency communication system, the UE may be equipped with multiple antenna panels, panels for short, so as to cover different directions. For the case of single-panel uplink transmission for a single transmission and reception point (TRP), the UE can report the PH to a base station according to the maximum transmission power of the UE and the transmission power of the PUSCH, and can report the PH through a PH report (PHR). For the case of single-panel uplink transmission for multiple TRPs (M-TRPs), the UE can report to the base station according to a PH reporting method specified in release-17 (R17). For the case of simultaneous multi-panel uplink transmission for M-TRPs, how to determine and report the PH is a technical problem to be solved.

SUMMARY

A power headroom (PH) reporting method and a related apparatus are provided in the disclosure, which can determine and report a PH for the case of simultaneous multi-panel uplink transmission for multiple transmission and reception points (M-TRPs), so that a network device can flexibly schedule resources.

In a first aspect, a PH reporting method is provided in the disclosure. The method is applied to a terminal device, where the terminal device has a first panel and a second panel, the first panel and the second panel are capable of simultaneous uplink transmission in a first time unit, the uplink transmission of the first panel in the first time unit is intended for a first TRP and/or a second TRP, the uplink transmission of the second panel in the first time unit is intended for the first TRP and/or the second TRP, and the method includes the following. A first PH is calculated according to a first transmission power and a maximum transmission power of the terminal device, and a second PH is calculated according to the maximum transmission power and a second transmission power. Control signaling is sent, where the control signaling contains the first PH and the second PH.

As can be seen, for the case where two panels are simultaneously used by the terminal device for uplink transmission to two TRPs in the first time unit, the terminal device can calculate and report two PHs, so that the network device can flexibly schedule resources.

In a possible implementation, the first transmission power is a transmission power of a panel p for physical channel transmission to the first TRP in the first time unit, and the second transmission power is a transmission power of the panel p for physical channel transmission to the second TRP in the first time unit, where the panel p is the first panel or the second panel. As can be seen, the PH is calculated according to a transmission power of a certain panel for a TRP, so that the network device can schedule resources for the panel.

In a possible implementation, the panel p has a minimum or maximum panel identifier. Alternatively, the panel p is a panel corresponding to a maximum or minimum transmission power for physical channel transmission to the first TRP. Alternatively, the panel p is a panel corresponding to a maximum or minimum transmission power for physical channel transmission to the second TRP.

In a possible implementation, the first transmission power is a sum of a transmission power of the first panel for physical channel transmission to the first TRP in the first time unit and a transmission power of the first panel for physical channel transmission to the second TRP in the first time unit, and the second transmission power is a sum of a transmission power of the second panel for physical channel transmission to the first TRP in the first time unit and a transmission power of the second panel for physical channel transmission to the second TRP in the first time unit. Alternatively, the first transmission power is a sum of a transmission power of the first panel for physical channel transmission to the first TRP in the first time unit and a transmission power of the second panel for physical channel transmission to the first TRP in the first time unit, and the second transmission power is a sum of a transmission power of the first panel for physical channel transmission to the second TRP in the first time unit and a transmission power of the second panel for physical channel transmission to the second TRP in the first time unit. As can be seen, the PH is calculated according to the sum of transmission powers, so that the network device will not schedule resources multiple times.

In a possible implementation, the first transmission power is an actual transmission power or a virtual transmission power, and the second transmission power is the actual transmission power or the virtual transmission power, which depends on a specific situation.

In a second aspect, a PH reporting method is provided in the disclosure. The method is applied to a terminal device, where the terminal device has a first panel and a second panel, the first panel and the second panel are capable of simultaneous uplink transmission in a first time unit, the uplink transmission of the first panel in the first time unit is intended for a first TRP and/or a second TRP, the uplink transmission of the second panel in the first time unit is intended for the first TRP and/or the second TRP, and the method includes the following. A first PH is calculated according to a first transmission power and a maximum transmission power of the first panel, and a second PH is calculated according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit. A third PH is calculated according to a third transmission power and a maximum transmission power of the second panel, and a fourth PH is calculated according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit. Control signaling is sent, where the control signaling contains the first PH, the second PH, the third PH, and the fourth PH.

As can be seen, the PH is calculated according to the maximum transmission power of different panels, so that the network device can schedule resources for different panels, thereby achieving more refined scheduling.

In a possible implementation, an identifier of the first panel is less than an identifier of the second panel, and a sorting order of the first PH, the second PH, the third PH, and the fourth PH in the control signaling is the first PH, the second PH, the third PH, and the fourth PH or is the first PH, the third PH, the second PH, and the fourth PH. As can be seen, the PH is reported in a certain order, so that the network device can know a correspondence among the PH, a panel, and a TRP and therefore can schedule resources.

In a possible implementation, there are multiple physical channel transmissions to the first TRP from the first panel in the first time unit, and the first transmission power is a transmission power of the first panel for a first one of physical channel transmissions to the first TRP in the first time unit; and/or there are multiple physical channel transmissions to the second TRP from the first panel in the first time unit, and the second transmission power is a transmission power of the first panel for a first one of physical channel transmissions to the second TRP in the first time unit. The same applies to the third transmission power and the fourth transmission power. If there are multiple transmissions in the first time unit, a transmission power for the first one of physical channel transmissions is selected as a reference transmission power, thereby reducing calculation amount.

In a possible implementation, the first transmission power is an actual transmission power or a virtual transmission power of the first panel for physical channel transmission to the first TRP in the first time unit, which depends on a specific situation. The same applies to the other three transmission powers.

In a third aspect, a PH reporting apparatus is provided in the disclosure. The PH reporting apparatus includes a processing unit and a communication unit. In an implementation, the processing unit is configured to calculate a first PH according to a first transmission power and a maximum transmission power of the terminal device, and calculate a second PH according to the maximum transmission power and a second transmission power. The communication unit is configured to send control signaling, where the control signaling contains the first PH and the second PH. In another implementation, the processing unit is configured to calculate a first PH according to a first transmission power and a maximum transmission power of the first panel and calculate a second PH according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit. The processing unit is further configured to calculate a third PH according to a third transmission power and a maximum transmission power of the second panel and calculate a fourth PH according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit. The communication unit is configured to send control signaling, where the control signaling contains the first PH, the second PH, the third PH, and the fourth PH.

In a fourth aspect, a PH reporting apparatus is provided in the disclosure. The PH reporting apparatus includes a processor, a memory, and a transceiver. The transceiver is configured to receive or send a signal. The memory is configured to store program codes. The processor is configured to invoke the program codes from the memory to implement the method according to the first aspect and any possible implementation of the first aspect or the method according to the second aspect and any possible implementation of the second aspect.

In a fifth aspect, a chip is provided in the disclosure. In an implementation, the chip is configured to calculate a first PH according to a first transmission power and a maximum transmission power of the terminal device and calculate a second PH according to the maximum transmission power and a second transmission power. The chip is further configured to send control signaling, where the control signaling contains the first PH and the second PH. In another implementation, the chip is configured to calculate a first PH according to a first transmission power and a maximum transmission power of the first panel and calculate a second PH according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit. The chip is further configured to calculate a third PH according to a third transmission power and a maximum transmission power of the second panel and calculate a fourth PH according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit. The chip is further configured to send control signaling, where the control signaling contains the first PH, the second PH, the third PH, and the fourth PH.

In a sixth aspect, a module device is provided in the disclosure. The module device includes a communication module, a power module, a storage module, and a chip module. The power module is configured to supply power to the module device. The storage module is configured to store data and instructions. The communication module is configured for internal communication within the module device or configured for communication between the module device and an external device. The chip module is configured to calculate a first PH according to a first transmission power and a maximum transmission power of the terminal device and calculate a second PH according to the maximum transmission power and a second transmission power; and send control signaling through the communication module, where the control signaling contains the first PH and the second PH. Alternatively, the chip module is configured to: calculate a first PH according to a first transmission power and a maximum transmission power of the first panel and calculate a second PH according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit; calculate a third PH according to a third transmission power and a maximum transmission power of the second panel and calculate a fourth PH according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit; and send control signaling, where the control signaling contains the first PH, the second PH, the third PH, and the fourth PH.

In a seventh aspect, a computer-readable storage medium is provided in the disclosure. The computer-readable storage medium is configured to store computer-readable instructions which, when executed by a PH reporting apparatus, cause the PH reporting apparatus to implement the method according to the first aspect and any possible implementation of the first aspect or the method according to the second aspect and any possible implementation of the second aspect.

In an eighth aspect, a computer program or a computer program product is provided in the disclosure. The computer program or the computer program product includes codes or instructions which, when executed by a computer, cause the computer to implement the method according to the first aspect and any possible implementation of the first aspect or the method according to the second aspect and any possible implementation of the second aspect.

BRIEF DESCRIPTION OF THE DRAWINGS

In order to describe more clearly technical solutions of embodiments of the disclosure, the following will give a brief introduction to the accompanying drawings used for describing embodiments. Apparently, the accompanying drawings described below are some embodiments of the disclosure. Based on these drawings, those of ordinary skill in the art can also obtain other drawings without creative effort.

FIG. 1 is a schematic architectural diagram of a communication system where embodiments of the disclosure are applied.
FIG. 2 is an example diagram of a terminal device equipped with two panels.
FIG. 3 is an example diagram illustrating single-panel uplink transmission.
FIG. 4 is an example diagram illustrating simultaneous multi-panel uplink transmission for multiple transmission and reception points (M-TRPs) provided in embodiments of the disclosure.
FIG. 5 is another example diagram illustrating simultaneous multi-panel uplink transmission for M-TRPs provided in embodiments of the disclosure.

FIG. 6 is a schematic flowchart of a power headroom (PH) reporting method provided in embodiments of the disclosure.

FIG. 7 is a schematic flowchart of another PH reporting method provided in embodiments of the disclosure.

FIG. 8 is an example diagram illustrating simultaneous two-panel uplink transmission for two TRPs provided in embodiments of the disclosure.

FIG. 9 is a schematic structural diagram of a PH reporting apparatus provided in embodiments of the disclosure.

FIG. 10 is a schematic structural diagram of another PH reporting apparatus provided in embodiments of the disclosure.

FIG. 11 is a schematic structural diagram of a chip module provided in embodiments of the disclosure.

DETAILED DESCRIPTION

The terms used herein in embodiments of the disclosure are only for the purpose of describing a particular embodiment rather than limiting the disclosure. As used in the specification and the appended claims of the disclosure, singular forms "a", "an", and "the" are intended to include plural forms as well, unless otherwise indicated explicitly in the context. It may further be understood that, the term "and/or" in this disclosure refers to any or all of possible combinations of one or more items that are listed.

It may be noted that, the terms "first", "second", "third", and the like in the specification, the claims, and the accompanying drawings of the disclosure are used to distinguish similar objects rather than describe a particular order or a precedence order. It may be understood that, the data used that way may be interchangeable where appropriate, so that the embodiments of the disclosure described herein can be implemented in sequences other than those illustrated or described herein. In addition, the terms "include", "comprise", and "have" as well as variations thereof are intended to cover non-exclusive inclusion. For example, a procedure, a method, a system, a product, or a server that includes a series of operations or units is not necessarily limited to those operations or units that are listed explicitly, but may include other operations or units that are not listed explicitly or include other operations or units that are inherent to such a procedure, a method, a product, or a device.

Embodiments of the disclosure can be applied to a $5^{th}$-generation (5G) system which may also be referred to as a new radio (NR) system, a $6^{th}$-generation (6G) system, a $7^{th}$-generation (7G) system, or another future communication system. This disclosure may also be applied to a long term evolution (LTE) system, and optionally, to a $2^{nd}$-generation (2G) or $3^{rd}$-generation (3G) system.

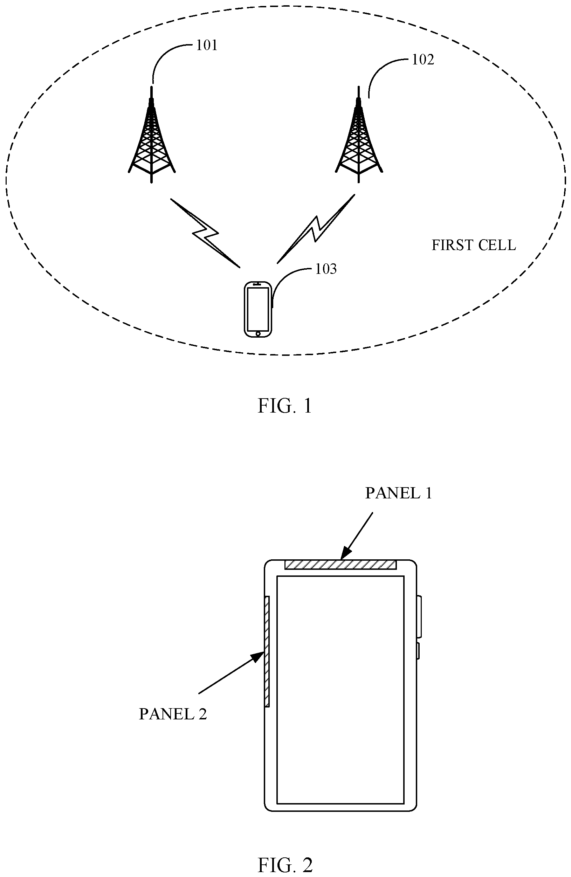

Reference is made to FIG. 1, where FIG. 1 is a schematic architectural diagram of a communication system where embodiments of the disclosure are applied. The communication system includes, but is not limited to, one network device (not illustrated in FIG. 1) that serves a first cell and one terminal device. The quantities and forms of the devices illustrated in FIG. 1 are intended for illustration, and do not constitute limitation on embodiments of the disclosure. In practice, two or more network devices and two or more terminal devices may be included. The first cell may include one or more transmission and reception points (TRPs). The dashed area illustrated in FIG. 1 is the coverage of the first cell, and the coverage of the first cell can be determined by the coverage of the one or more TRPs. The first cell including one or more TRPs can also be referred to as: the one or more TRPs belong to the first cell; alternatively, the one or more TRPs are combined by the network device into the first cell and use the same physical cell identifier (PCI); alternatively, the one or more TRPs are combined by the network device into the first cell, and different TRPs may use the same PCI or different PCIs. The communication system illustrated in FIG. 1 may include one terminal device 103 and one network device, and the first cell that the network device serves may include, for example, two TRPs (i.e., a first TRP 101 and a second TRP 102).

The terminal device is a device with wireless transceiver functions. The terminal device may also be referred to as a terminal, a user equipment (UE), a mobile station (MS), a mobile terminal (MT), an access terminal device, an in-vehicle terminal device, an industrial- control terminal device, a UE unit, a UE station, a remote station, a remote terminal device, a mobile device, a UE terminal device, a wireless communication device, a UE agent, a UE apparatus, or the like. The terminal device can be fixed or mobile. In some embodiments, the terminal device may also be an apparatus with transceiver functions, such as a chip module. The chip module may include a chip or other discrete components. Embodiments of the disclosure do not limit a specific technology and a specific device form that are used by the terminal device.

In this disclosure, the terminal device may be equipped with multiple panels. For example, as illustrated in FIG. 2, the terminal device is equipped with two panels. The terminal device may use one of the multiple panels for uplink transmission. For example, the terminal device uses panel 1 to transmit a signal and/or a physical channel to the first TRP. For another example, the terminal device uses panel 1 to transmit a signal and/or a physical channel to the first TRP at time 1 and transmit the signal and/or the physical channel to the second TRP at time 2. The terminal device may use the multiple panels for time-division transmission. For example, the terminal device uses panel 1 for uplink transmission at time 1 and uses panel 2 for uplink transmission at time 2. The terminal device may use the multiple panels for simultaneous transmission. For example, the terminal device uses both panel 1 and panel 2 for uplink transmission at time 1.

The signal may include a sounding reference signal (SRS), a de-modulation reference signal (DMRS), a phase noise tracking reference signal (PTRS), an uplink positioning reference signal, and the like. The physical channel may include a physical uplink shared channel (PUSCH), a physical uplink control channel (PUCCH), a physical random access channel (PRACH), and the like.

The network device is a device which provides wireless communication functions for the terminal device, and may also be referred to as an access network (AN) device or a radio access network (RAN) device, etc. Exemplarily, the network device includes, but is not limited to, a next generation nodeB (gNB), an evolved node B (eNB), a radio network controller (RNC), a node B (NB), a base station controller (BSC), a base transceiver station (BTS), a home base station (for example, a home evolved node B or home node B (HNB)), a baseband unit (BBU), a transmitting point (TP), a mobile switching center, and the like in 5G. In some embodiments, the network device may also be an apparatus that provides wireless communication functions for the terminal device, for example, a chip module. Exemplarily, the chip module may include a chip and other discrete components. Embodiments of the disclosure do not limit a specific technology and a specific device form that are used by the network device.

It may be understood that, the communication system described in embodiments of the disclosure is intended for describing the technical solutions of embodiments of the disclosure more clearly, and does not constitute limitation on the technical solutions provided in embodiments of the disclosure. The person skilled in the art may know that, with evolution of system architectures and emergence of new service scenarios, the technical solutions provided in embodiments of the disclosure are also applicable to similar technical problems.

For better understanding of the disclosure, related concepts in the disclosure will be elaborated first.

1. Power headroom (PH), PH report (PHR)

The PH represents a power difference between a maximum transmission power allowed for the UE and a currently-evaluated transmission power of the PUSCH. In a 5G system, the PH may also represent a power difference between the maximum transmission power allowed for the UE and a currently-evaluated transmission power of the SRS, or a power difference between the maximum transmission power allowed for the UE and a currently-evaluated transmission power of the PUCCH. The power difference may be a difference between two powers in a broad sense, or may also be obtained without subtracting the two powers. For example, the power difference is obtained by subtracting a linear value of the PUSCH transmission power from a linear value of the maximum transmission power, or is obtained by subtracting a decibel (dB) value of the PUSCH transmission power from a dB value of the maximum transmission power. That is, the linear value of the maximum transmission power is divided by the linear value of the PUSCH transmission power to obtain a result, and then the result is converted to a dB value.

The value of the PH may be positive, for example, the maximum transmission power is greater than the PUSCH transmission power, which indicates that the UE still has more PH to be allocated. When the network device obtains the PH, during transmission resource allocation for the UE, the network device can continue to increase the number of transmission resources to be allocated for the UE. The value of the PH may be negative, for example, the maximum transmission power is less than the PUSCH transmission power, which indicates that the uplink transmission power scheduled by the network device for the UE exceeds the maximum transmission power allowed for the UE. When the network device obtains the PH, during transmission resource allocation for the UE, the network device can reduce the number of transmission resources to be allocated for the UE.

The PHR is used to report the value of the PH, or in other words, the PHR contains the value of the PH. For example, in the 5G system, the value of the PH that can be reported in the PHR ranges from -32 dB to 42 dB, and reference can be made to Table 1 below.

Table 1

| reported value | measured quantity value (dB) |
|---|---|
| power_headroom_0 | PH<-32 |
| power_headroom_1 | -32≤PH<-31 |
| power_headroom_2 | -31≤PH<-30 |
| ... | ... |
| power_headroom_60 | 36≤PH<38 |
| power_headroom_61 | 38≤PH<40 |
| power_headroom_62 | 40≤PH<42 |

(continued)

| reported value | measured quantity value (dB) |
|---|---|
| power_headroom_63 | PH$\geq$42 |

In Table 1, if the PHR contains power_headroom_62, then it indicates that the PH is greater than or equal to 40 dB and is less than 42 dB.

2. Single-panel uplink transmission for a single TRP

The single-panel uplink transmission for the single TRP means that the UE uses one panel to transmit a signal and/or a physical channel to one TRP, and can also be referred to as single-panel single-TRP transmission or single-TRP single-panel transmission. For example, the UE uses panel 1 to transmit the PUSCH to the first TRP. For the case of single-panel uplink transmission for the single TRP, the UE can report a PH to the network device according to type1 or type3. Optionally, type1 and type3 are also applicable to the case of multiple panels for a single TRP.

Type1 may include the following two modes.

Mode 1, an actual PHR is reported. If the UE determines that a type1 PHR for an activated serving cell is based on an actual PUSCH transmission, then the UE can calculate the PH according to formula (1).

Formula (1):

$$PH_{type1,b,f,c}(i,j,q_d,l) = P_{CMAX,f,c}(i) - \{P_{O\_PUSCH,b,f,c}(j) + 10\log_{10}(2^\mu \cdot M_{RB,b,f,c}^{PUSCH}(i)) + \alpha_{b,f,c}(j) \cdot PL_{b,f,c}(q_d)$$
$$+ \Delta_{TF,b,f,c}(i) + f_{b,f,c}(i,l)\}$$

In the above, i represents a PUSCH transmission occasion and is used to identify a time unit, for example, a slot or a sub-slot, $f$ represents a carrier, c represents a serving cell, $b$ represents an activated uplink bandwidth part (BWP), j represents a configured parameter-set index, and l represents a PUSCH power-control-adjustment-state index. The unit of the PH in formula (1) is dB.

$P_{CMAX,f,c}$ (i) represents the UE-allowed maximum transmission power for the carrier $f$ of the serving cell c in the PUSCH transmission occasion $i$.

$P_O$ represents a reference power density which may also be referred to as a nominal power, and the physical meaning of $P_O$ is a power density of a signal that is expected to be received by a receiver, where the power density refers to a density of a power in a frequency domain. $P_{O\_PUSCH,b,f,c}(j)$ is a power control parameter including $P_{O\_NOMNAL\_PUSCH,f,c}$ (j) and $P_{O\_UE\_PUSCH,b,f,c}(j)$, where $j \in \{0,1, ..., J$ -1$\}$. If *PO-PUSCH AlphaSet* or an uplink grant related to the PUSCH transmission is not provided for the UE, then when $j = 0$, $P_{O\_UE\_PUSCH,b,f,c}(j) = 0$ and $P_{O\_NOMINAL\_PUSCH,f,c}(0) = P_{O\_PRE} + \Delta_{PREAMBLE\_Msg3}$. $P_{O\_PRE}$ may be provided by the higher-layer parameter *preambleReceivedTargetPower,* and $\Delta_{PPEAMBLE\_Msg3}$ may be provided by the higher-layer parameter *msg3-DeltaPreamble*. Alternatively, if *msg3-Delta-Preamble* is not provided for the carrier $f$ of the serving cell $c$, then $\Delta_{PREAMBLE\_Msg3}$ is 0 dB. If the PUSCH transmission is configured by *ConfiguredGrantConfig,* then when $j = 1$, $P_{O\_NOMINAL\_PUSCH,b,f,c}(1)$ may be provided by *pO-Nominal-WithoutGrant* or may not be provided by *pO-NominalWithoutGrant*, $P_{O\_NOMINAL\_PUSCH,b,f,c}(1) = P_{O\_NOMINAL\_PUSCH,b,f,c}(0)$. In this case, $P_{O\_UE\_PUSCH,b,f,c}(1)$ is provided by p0 obtained from *p0-PUSCH-Alpha* in *ConfiguredGrantConfig,* and *ConfiguredGrantConfig* provides an index for indicating *PO-PUSCH-AlphaSetId* in *PO-PUSCH AlphaSet* for the carrier $f$ of the serving cell c in the PUSCH transmission occasion $i$. For $j \in \{2,...,J$ -1$\} = S_J$, the value of $P_{O\_NOMINAL\_PUSCH,b,f,c}(j)$ is applicable to $j \in S_J$ and is provided by *p0-NominalWithGrant,* or $P_{O\_NOMINAL\_PUSCH,b,f,c}(j) = P_{O\_NOMINAL\_PUSCH,b,f,c}(0)$ when *p0-NominalWithGrant* is not provided. For each carrier $f$ of the serving cell c, a set of values of $P_{O\_NOMINAL\_PUSCH,b,f,c}(j)$ are provided by a set of *p0* in *p0-PUSCH-AlphaSet*, and one *p0-PUSCH-AlphaSet* is indicated by *p0-PUSCH-AlphaSetId.*

$\alpha$ represents a path loss compensation factor. For $\alpha_{b,f,c}(j)$, when $j = 0$, the value of $\alpha_{b,f,c}(0)$ is provided by *msg3-Alpha,* and otherwise, the value of $\alpha_{b,f,c}(0)$ is 1. When $j = 1$, the value of $\alpha_{b,f,c}(1)$ is provided by *alpha, alpha* is obtained from *p0-PUSCH-Alpha* in *ConfiguredGrantConfig,* and one *PO-PUSCH AlphaSet* is indicated by *p0-PUSCH AlphaSetId.*

When $j \in S_J$, the value of $\alpha_{b,f,c}(j)$ is provided by *alpha* in *PO-PUSCH AlphaSet*. $M_{RB,b,f,c}^{PUSCH}(i)$ is a bandwidth of the PUSCH resource assignment for the PUSCH transmission occasion $i$ on the uplink BWP of the carrier $f$ of the serving cell *c.* $\mu$ is a subcarrier space (SCS).

*PL* represents a path loss and is used to compensate for a path loss in signal transmission. $PL_{b,f,c}(q_d)$ is calculated by the UE according to the reference signal index $q_d$.

$\Delta_{\text{TF},b,f,c}(i)$ and $f_{b,f,c}(i,l)$ each represent a power control parameter. $\Delta_{\text{TF}}$ represents a power offset value related to the modulation and coding scheme and the signal content. $f$ represents a closed-loop power control adjustment amount of a data channel.

Mode 2, a virtual PHR is reported. If the UE determines that a type1 PHR for an activated serving cell is based on a reference PUSCH transmission, that is, an actual PUSCH transmission does not exist, then the UE can calculate the PH according to formula (2).

$$PH_{type1,b,f,c}(i,j,q_d,l) = \tilde{P}_{\text{CMAX},f,c}(i) - \{P_{\text{O\_PUSCH},b,f,c}(j) + \alpha_{b,f,c}(j) \cdot PL_{b,f,c}(q_d) + f_{b,f,c}(i,l)\} \quad \text{formula (2)}$$

In the above, $\tilde{P}_{\text{CMAX},f,c}(i)$ is calculated based on MPR = 0 dB, A-MPR = 0 dB, and P-MPR = 0 dB. $P_{\text{O\_PUSCH},b,f,c}(j)$ and $\alpha_{b,f,c}(j)$ can be obtained according to $P_{\text{O\_NONINAL\_PUSCH},f,c}(0)$ *and p0-PUSCH AlphaSetId* = 0, and $PL_{b,f,c}(q_d)$ can be obtained according to *pusch-PathlossReferenceRS-Id* = 0 and *l* = 0. For the remaining parameters, reference can be made to the explanations of the respective parameters in the above formula (1).

Type3 may include the following two modes.

Mode 3, an actual PHR is reported. If the UE determines that a type1 PHR for an activated serving cell is based on an actual SRS transmission, then the UE can calculate the PH according to formula (3).

$PH_{type3,b,f,c}(i,q_s) \quad = \quad P_{\text{CMAX},f,c}(i) - \{P_{\text{O-SRS},b,f,c}(q_s) + 10\log_{10}(2^\mu \cdot M_{\text{SRS},b,f,c}(i)) + \alpha_{\text{SRS},b,f,c}(q_s) \cdot PL_{b,f,c}(q_d) + h_{b,f,c}(i)\}$  Formula (3):

In the above, $q_s$ represents an SRS resource set and is determined by *SRS-ResourceSet* and *SRS-ResourceSetId,* and *h* represents a closed-loop power control adjustment amount of an SRS. For the remaining parameters, reference can be made to the explanations of the respective parameters in formula (1). The difference is that each parameter in formula (1) is intended for the PUSCH and each parameter in formula (3) is intended for the SRS.

Mode 4, a virtual PHR is reported. If the UE determines that a type1 PHR for an activated serving cell is based on a reference SRS transmission, that is, an actual SRS transmission does not exist, then the UE can calculate the PH according to formula (4).

$$PH_{type3,b,f,c}(i,q_s) = \tilde{P}_{\text{CMAX},f,c}(i) - \{P_{\text{O\_SRS},b,f,c}(q_s) + \alpha_{\text{SRS},b,f,c}(q_s) \cdot PL_{b,f,c}(q_d) + h_{b,f,c}(i,l)\} \quad \text{formula (4)}$$

In the above, $q_s$ represents an SRS resource set corresponding to *SRS ResourceSetId* = 0.

It may be noted that, for the specific explanations of the respective parameters in formula (1) to formula (4) above, reference can be made to the description of the part "uplink power control" in TS38.213.

3. Single-panel uplink transmission for multiple TRPs (M-TRPs)

The single-panel uplink transmission for M-TRPs means that the UE uses one panel to transmit a signal and/or a physical channel to the M-TRPs. Since one beam is used for one panel for transmission at a time, the transmission of the UE to the M-TRPs is conducted in a time-division manner (at different times). For example, during PUSCH repetitions, one panel is used to transmit a PUSCH to the first TRP in a first time unit and transmit the PUSCH to the second TRP in a second time unit. The single-panel uplink transmission for M-TRPs can also be referred to as single-panel M-TRP time-division transmission, single-panel M-TRP repetitions, or M-TRP repetitions, etc. Optionally, the UE may use different panels for uplink transmission at different times.

For the case of single-panel uplink transmission for M-TRPs, the UE can send a PHR to the network device according to related specification in release-17 (R17). The related specification in R17 is as follows.

For the case where the UE supports M-TRP PUSCH repetitions, for PHR reporting under M-TRP PUSCH repetitions, option 4 is supported as the UE optional capability. Option 4: two PHRs (at least corresponding to a component carrier (CC) that is applied to M-TRP PUSCH repetitions) are calculated, each associated with a first PUSCH transmission occasion for each TRP, and the two PHRs are reported.

For option 4, when a media access control-control element (MAC-CE) carrying the PHRs is reported in slot *n,* for a CC that is configured for one M-TRP PUSCH repetition, 1) if the first PHR is an actual PHR and corresponds to one repetition for a specified TRP among the M-TRP PUSCH repetitions, then when the repetition is associated with the other TRP, the second PHR is the actual PHR, and otherwise, the second PHR is a virtual PHR. If there are multiple repetitions for the other TRP in slot n, then the second PHR is a PHR corresponding to the most recent one of PUSCH transmissions. 2) If the first PHR is the actual PHR but does not correspond to one of M-TRP PUSCH repetitions, i.e., corresponds to a single-TRP PUSCH transmission, then the second PHR is the virtual PHR. 3) If the first PHR is the virtual PHR, then the second PHR is the virtual PHR.

It may be noted that, when the second PHR is the virtual PHR, the second PHR is calculated according to a default power control parameter. The default power control parameter is intended for another TRP, i.e. a TRP that is not associated with the first PHR.

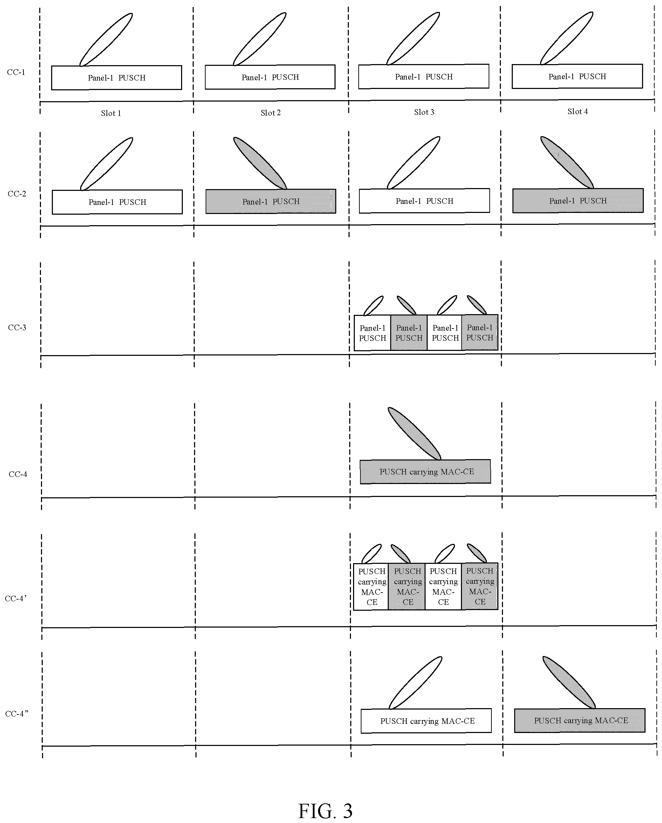

Exemplarily, FIG. 3 is an example diagram illustrating single-panel uplink transmission. As illustrated in FIG. 3, the uplink transmission may include single-panel PUSCH repetitions for a single TRP and single-panel PUSCH repetitions for two TRPs. For CC-1, the UE uses panel 1 for PUSCH repetitions for TRP1, and transmits one PUSCH in one slot. For CC-2, the UE uses panel 1 to transmit a PUSCH to TRP1 in slot 1, transmit the PUSCH to TRP2 in slot 2, transmit the PUSCH to TRP1 in slot 3, and transmit the PUSCH to TRP4 in slot 4. For CC-3, the UE uses panel 1 to transmit a PUSCH to TRP1 and TRP2 in a time-division manner in slot 3, and the PUSCH is transmitted to each of TRP1 and TRP2 twice. CC-4, CC-4', and CC-4" can be used to carry the MAC-CE, and the MAC-CE can carry the PHR.

For CC-4, the UE uses panel 1 to transmit a PUSCH to TRP2 in slot 3, where the PUSCH can carry the MAC-CE. The PHR carried in the MAC-CE contains a PH of a single TRP (i.e., TRP1) corresponding to CC-1, an actual PH of TRP1 and a virtual PH of TRP2 corresponding to CC-2, an actual PH of TRP1 and an actual PH of TRP2 corresponding to CC-3, and a PH of a single TRP (i.e., TRP2) corresponding to CC-4. Since CC-1 is intended for TRP1 PUSCH repetitions, the PHR contains the PH of TRP1 corresponding to CC-1. Since CC-2 is intended for TRP1 PUSCH repetitions and TRP2 PUSCH repetitions and is configured for PUSCH transmission to TRP1 in slot 3, the PHR contains the actual PH of TRP1 and the virtual PH of TRP2 corresponding to CC-2. Since in CC-3, a PUSCH is transmitted to TRP1 and TRP2 in a time-division manner in slot 3, i.e., actual transmissions for both TRP1 and TRP2 exist, the PHR contains the actual PH of TRP1 and the actual PH of TRP2 corresponding to CC-3. Since in CC-4, a PUSCH is transmitted to TPR2 in slot 3, the PHR contains the PH of TRP2 corresponding to CC-4.

For CC-4', the UE uses panel 1 to transmit a PUSCH to TRP1 and TRP2 in a time-division manner in slot 3, and the PUSCH is transmitted to each of TRP1 and TRP2 twice. The PUSCH transmitted in slot 3 carries the MAC-CE, and the PHR carried in the MAC-CE contains a PH of a single TRP (i.e., TRP1) corresponding to CC-1, an actual PH of TRP1 and a virtual PH of TRP2 corresponding to CC-2, an actual PH of TRP1 and an actual PH of TRP2 corresponding to CC-3, and an actual PH of TRP1 and an actual PH of TRP2 corresponding to CC-4'. Since in CC-4', a PUSCH is transmitted to each of TRP1 and TRP2 in slot 3, i.e., actual transmissions for both TRP1 and TRP2 exist, the PHR contains the actual PH of TRP1 and the actual PH of TRP2 corresponding to CC-4'.

For CC-4", the UE uses panel 1 to transmit a PUSCH to TRP1 in slot 3 and transmit a PUSCH to TRP2 in slot 4. The PUSCH transmitted in slot 3 carries the MAC-CE, and the PHR carried in the MAC-CE contains a PH of a single TRP (i.e., TRP1) corresponding to CC-1, an actual PH of TRP1 and a virtual PH of TRP2 corresponding to CC-2, an actual PH of TRP1 and an actual PH of TRP2 corresponding to CC-3, and an actual PH of TRP1 and a virtual PH of TRP2 corresponding to CC-4". Since in CC-4", the PUSCH is transmitted to TRP1 in slot 3 and the PUSCH is transmitted to TRP2 in slot 4, i.e., an actual transmission for TRP1 exists in slot 3 and an actual transmission for TRP2 does not exist in slot 3, the PHR contains the actual PH of TRP1 and the virtual PH of TRP2 corresponding to CC-4".

4. Simultaneous multi-panel uplink transmission for M-TRPs

The simultaneous multi-panel uplink transmission for M-TRPs means that the UE uses multiple panels to simultaneously transmit a signal and/or a physical channel to the M-TRPs. For example, the UE uses panel 1 for transmission to TRP1, and simultaneously uses panel 2 for transmission to TRP2. For another example, the UE uses panel 1 for transmission to TRP1 and TRP2, and simultaneously uses panel 2 for transmission to TRP1 and TRP2. The simultaneous multi-panel uplink transmission for M-TRPs can also be referred to as simultaneous multi-panel M-TRP transmission, multi-panel M-TRP repetitions, and the like. The number of multiple panels may be the same as the number of M-TRPs, for example, both are two. Alternatively, the number of multiple panels may be different from the number of M-TRPs, for example, two panels and three TRPs.

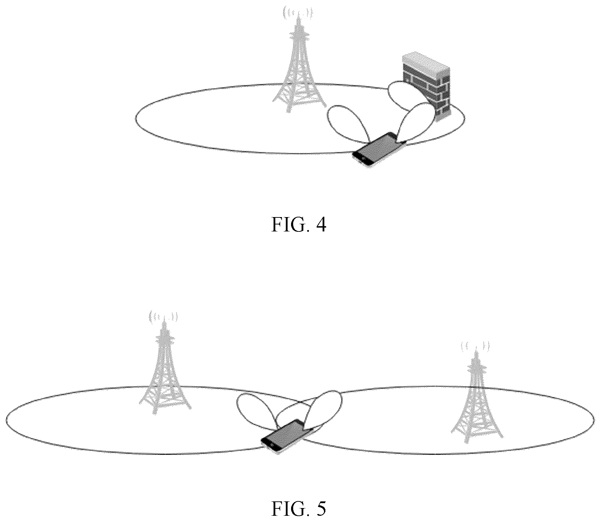

For the simultaneous multi-panel uplink transmission for M-TRPs, the M-TRPs may be M-TRPs in the same cell. For example, as illustrated in FIG. 4, the UE uses two beams (each beam corresponds to one panel) for communication with a base-station antenna of the same cell. During actual implementation, for example, the base station can use a remote antenna technology in which antennas are deployed in a distributed manner, and the UE can use two beams for simultaneous communication with base-station antennas that are deployed in two different directions. For another example, a communication path with strong reflection exists in the environment. As illustrated in FIG. 4, the UE can use two panels to perform simultaneous transmission in two different directions and the base station performs reception. The M-TRPs may correspond to multiple cells, that is, the UE can use multiple panels for simultaneous uplink transmission to M-TRPs of the multiple cells. For example, as illustrated in FIG. 5, the terminal device uses two beams for uplink transmission, one beam for a TRP of a current serving cell, and the other uplink beam for a TRP of another cell.

During simultaneous multi-panel uplink transmission for M-TRPs, how the UE reports the PH is a technical problem to be solved. A PH reporting method and a related apparatus are provided in the disclosure, which can determine and report the PH for the case of simultaneous multi-panel uplink transmission for M-TRPs, so that the network device can flexibly schedule resources. For example, in the PH reporting method provided in the disclosure, the UE has two panels, where the two panels are respectively a first panel and a second panel. The UE can use the first panel and the second panel for simultaneous uplink transmission, the uplink transmission of the first panel in the first time unit is intended for the first TRP and/or the second TRP, and the uplink transmission of the second panel in the first time unit is intended for the first TRP and/or the second TRP. For example, the UE uses the first panel to transmit a signal and/or a physical channel to the first TRP in the first time unit, and simultaneously uses the second panel to transmit a signal and/or a physical channel to the second TRP. Other number of panels and other number of TRPs can be expanded based on this. A time unit may be a slot, a sub-slot, or an orthogonal frequency division multiplexing (OFDM) symbol, etc. It is assumed below that the first panel is panel 1, the second panel is panel 2, the first TRP is TRP1, and the second TRP is TRP2.

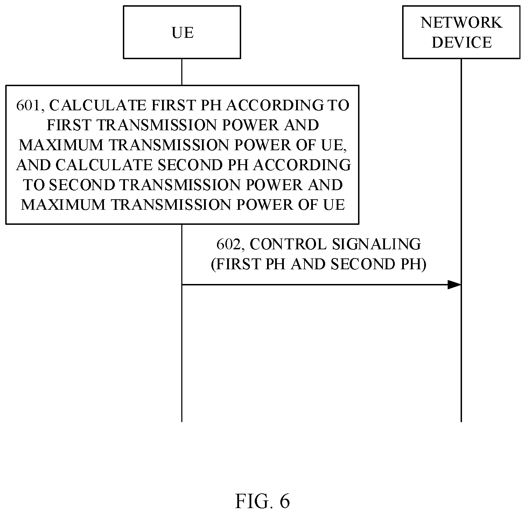

Reference is made to FIG. 6, where FIG. 6 is a schematic flowchart of a PH reporting method provided in embodiments of the disclosure. The method includes, but is not limited to, the following operations.

601, a UE calculates a first PH according to a first transmission power and a maximum transmission power of the UE, and calculates a second PH according to a second transmission power and the maximum transmission power of the UE.

The maximum transmission power of the UE is $P_{\text{CMAX},f,c}(i)$ in formula (1) or $\tilde{P}_{\text{CMAX},f,c}(i)$ in formula (2). If an actual PUSCH transmission exists, then the maximum transmission power is $P_{\text{CMAX},f,c}(i)$ in formula (1). If the actual PUSCH transmission does not exist, then the maximum transmission power is $\tilde{P}_{\text{CMAX},f,c}(i)$ in formula (2). It may be understood that multiple panels share one maximum transmission power, for example, panel 1 and panel 2 share one maximum transmission power.

In an implementation, the first transmission power is a transmission power of a panel p for physical channel transmission to TRP1 in the first time unit, and the second transmission power is a transmission power of the panel p for physical channel transmission to TRP2 in the first time unit. A physical channel may be a PUSCH or a PUCCH, and the term "physical channel" may also be replaced with an "SRS". The panel p is panel 1 or panel 2. In this method, the first PH is calculated according to the first transmission power, and the second PH is calculated according to the second transmission power, which can refer to the above related specification in R17. Assuming that the maximum transmission power is $P_{\text{CMAX},f,c}(i)$, the first transmission power is represented by P1, and the second transmission power is represented by P2, then the first PH is represented by $P_{\text{CMAX},f,c}(i)$ -P1 and the second power headroom is represented by $P_{\text{CMAX},f,c}(i)$ -P2.

Optionally, the panel p has a minimum or maximum panel identifier. If the panel p has a minimum panel identifier, the panel p is panel 1. If the panel p has a maximum panel identifier, the panel p is panel 2. The panel identifier may be panel ID, or the panel can be identified through a beam ID or an SRS resource set ID.

Optionally, the panel p is a panel corresponding to a maximum or minimum transmission power for PUSCH transmission to TRP1. The transmission power for PUSCH transmission to TRP1 may be a transmission power for the first one of PUSCH transmissions to TRP1, and may also be a sum of transmission powers for multiple PUSCH transmissions to TRP1. For example, the transmission power of panel 1 for PUSCH transmission to TRP1 is 100 dB, and the transmission power of panel 2 for PUSCH transmission to TRP1 is 120 dB. If the panel p is a panel corresponding to the maximum transmission power for PUSCH transmission to TRP1, then the panel p is panel 2. If the panel p is a panel corresponding to the minimum transmission power for PUSCH transmission to TRP1, then the panel p is panel 1.

Optionally, the panel p is a panel corresponding to a maximum or minimum transmission power for PUSCH transmission to TRP2. The transmission power for PUSCH transmission to TRP2 may be a transmission power for the first one of PUSCH transmissions to TRP2, and may also be a sum of transmission powers for multiple PUSCH transmissions to TRP2. For example, the transmission power of panel 1 for PUSCH transmission to TRP2 is 100 dB, and the transmission power of panel 2 for PUSCH transmission to TRP2 is 120 dB. If the panel p is a panel corresponding to the maximum transmission power for PUSCH transmission to TRP2, then the panel p is panel 2. If the panel p is a panel corresponding to the minimum transmission power for PUSCH transmission to TRP2, then the panel p is panel 1.

Optionally, the panel p is a specified panel. For example, the network device can indicate, through indication information, a transmission power of which panel is based on by the UE to calculate the PH. For example, the network device carries the indication information in downlink control information (DCI), where the indication information indicates a panel identifier or an SRS resource set identifier, so that the UE can determine the panel p.

The above four options are intended for illustration, and do not constitute limitation on embodiments of the disclosure. In practice, the panel p can also be determined in other methods.

In another implementation, the first transmission power is a sum of a transmission power of panel 1 for physical channel transmission to TRP1 in the first time unit and a transmission power of panel 1 for physical channel transmission to TRP2 in the first time unit, and the second transmission power is a sum of a transmission power of panel 2 for physical channel transmission to TRP1 in the first time unit and a transmission power of panel 2 for physical channel transmission to TRP2 in the first time unit. Alternatively, the first transmission power is a sum of a transmission power of panel 1 for physical channel transmission to TRP1 in the first time unit and a transmission power of panel 2 for physical channel transmission to TRP1 in the first time unit, and the second transmission power is a sum of a transmission power of panel 1 for physical channel transmission to TRP2 in the first time unit and a transmission power of panel 2 for physical channel transmission to TRP2 in the first time unit.

In yet another implementation, the first transmission power is a transmission power of panel 1 for physical channel transmission to TRP t in the first time unit, and the second transmission power is a transmission power of panel 2 for physical channel transmission to TRP t in the first time unit. For a selection rule of TRP t, reference can be made to the selection rule of the panel p. Optionally, TRP t is a TRP with less or greater interference or a TRP with good or poor channel quality.

In yet another implementation, the first transmission power and the second transmission power are any two of a transmission power of panel 1 for PUSCH transmission to TRP1, a transmission power of panel 1 for PUSCH transmission to TRP2, a transmission power of panel 2 for PUSCH transmission to TRP1, and a transmission power of panel 2 for PUSCH transmission to TRP2, in the first time unit. If there are multiple repetitions in the first time unit, each of the above four transmission powers refers to a transmission power for the first one of PUSCH transmissions.

In the first time unit, transmission states between panel 1 and the two TRPs may include the following.

(1) Panel-1-TRP-1actualPUSCHtransmission, which indicates that there is an actual PUSCH transmission to TRP1 from panel 1 and there is no PUSCH transmission to TRP2 from panel 1.

(2) Panel-1-TRP-2actualPUSCHtransmission, which indicates that there is an actual PUSCH transmission to TRP2 from panel 1 and there is no PUSCH transmission to TRP1 from panel 1.

(3) Panel-1-TRP-1actualPUSCHtransmission, TRP-2actualPUSCHtransmission, which indicates that there are actual PUSCH transmissions to both TRP1 and TRP2 from panel 1.

(4) Panel-1noTRP-1actualPUSCHtransmission, noTRP-2actualPUSCHtransmission, which indicates that there is no actual PUSCH transmission to both TRP1 and TRP2 from panel 1.

In the first time unit, transmission states between panel 2 and the two TRPs may include the following.

(5) Panel-2-TRP-1actualPUSCHtransmission, which indicates that there is an actual PUSCH transmission to TRP1 from panel 2 and there is no PUSCH transmission to TRP2 from panel 1.

(6) Panel-2-TRP-2actualPUSCHtransmission, which indicates that there is an actual PUSCH transmission to TRP2 from panel 2 and there is no PUSCH transmission to TRP1 from panel 1.

(7) Panel-2-TRP-1actualPUSCHtransmission, TRP-2actualPUSCHtransmission, which indicates that there are actual PUSCH transmissions to both TRP1 and TRP2 from panel 2.

(8) Panel-2noTRP-1actualPUSCHtransmission, noTRP-2actualPUSCHtransmission, which indicates that there is no actual PUSCH transmission to both TRP1 and TRP2 from panel 2.

Each of the transmission states (1) to (4) may be combined with one of the transmission states (5) to (8) to form transmission states between the two panels and the two TRPs.

The UE determines, according to the transmission states between the two panels and the two TRPs and according to actual situations, that the first transmission power is an actual transmission power or a virtual transmission power and the second transmission power is the actual transmission power or the virtual transmission power.

602, the UE sends control signaling to the network device. Correspondingly, the network device receives the control signaling from the UE. The control signaling contains the first PH and the second PH.

The control signaling may be an MAC-CE. The MAC-CE contains two PHRs, one of the two PHRs contains the first PH, and the other one of the two PHRs contains the second PH. Alternatively, the MAC-CE contains one PHR, and the one PHR contains the first PH and the second PH.

Upon reception of the control signaling, the network device can flexibly schedule transmission resources for the UE according to the first PH and the second PH.

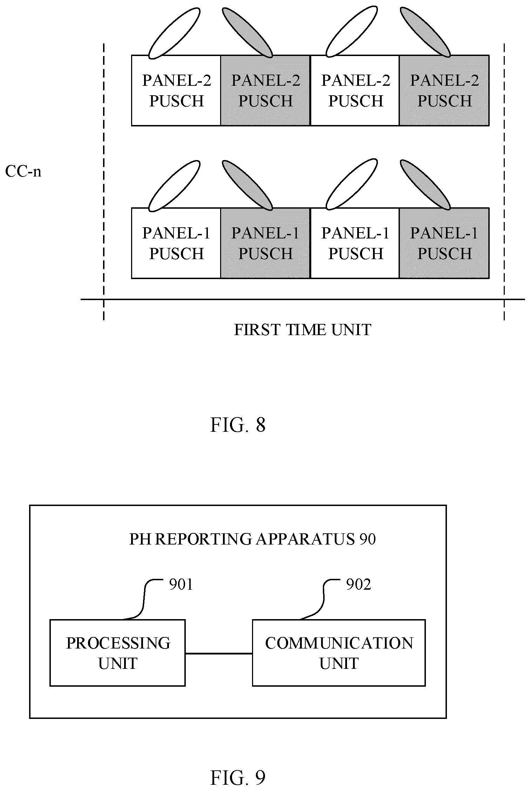

Example 1, based on the example diagram illustrated in FIG. 8, FIG. 8 corresponds to the above transmission states (3) and (7). Assuming that the panel p is panel 1, for CC-n: the first transmission power is a transmission power (an actual transmission power) of panel 1 for the first one of PUSCH transmissions to TRP1 in the first time unit, and the second transmission power is a transmission power (an actual transmission power) of panel 1 for the first one of PUSCH transmissions to TRP2 in the first time unit, then the first PH is the maximum transmission power of the UE minus the first transmission power, and the second PH is the maximum transmission power of the UE minus the second transmission power.

Example 2, based on the example diagram illustrated in FIG. 8, for CC-n: the first transmission power is the sum of the transmission power of panel 1 for physical channel transmission to TRP1 in the first time unit and the transmission power of panel 1 for physical channel transmission to TRP2 in the first time unit, for example, the sum of the actual transmission power of panel 1 for the first one of PUSCH transmissions to TRP1 and the actual transmission power of panel 1 for the first one of PUSCH transmissions to TRP2. In addition, the second transmission power is the sum of the transmission power of panel 2 for physical channel transmission to TRP1 in the first time unit and the transmission power of panel 2 for physical channel transmission to TRP2 in the first time unit, for example, the sum of the actual transmission power of panel 2 for the first one of PUSCH transmissions to TRP1 and the actual transmission power of panel 2 for the first one of PUSCH transmissions to TRP2.

In the embodiment illustrated in FIG. 6, for the case of simultaneous multi-panel uplink transmission for M-TRPs, the UE determines and reports two PHs, so that the network device can flexibly schedule resources.

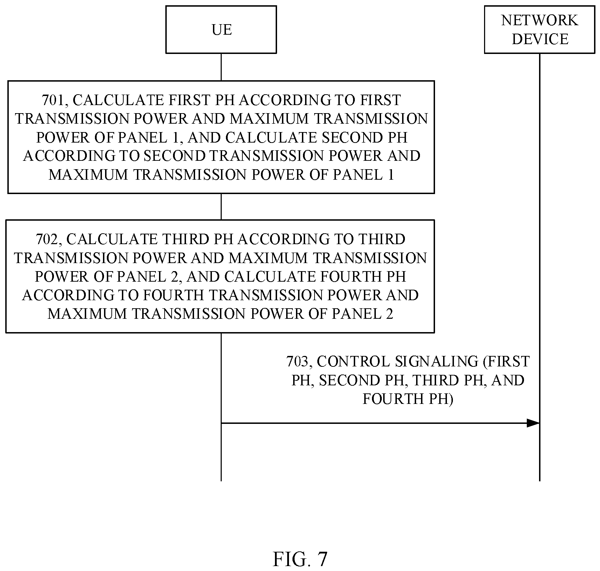

Reference is made to FIG. 7, where FIG. 7 is a schematic flowchart of another PH reporting method provided in embodiments of the disclosure. The method includes, but is not limited to, the following operations.

701, a first PH is calculated according to a first transmission power and a maximum transmission power of panel 1, and a second PH is calculated according to a second transmission power and the maximum transmission power of panel 1. The first transmission power is a transmission power of panel 1 for physical channel transmission to TRP1 in the first time unit, and the second transmission power is a transmission power of panel 1 for physical channel transmission to TRP2 in the first time unit.

702, a third PH is calculated according to a third transmission power and a maximum transmission power of panel 2, and a fourth PH is calculated according to a fourth transmission power and the maximum transmission power of panel 2. The third transmission power is a transmission power of panel 2 for physical channel transmission to TRP1 in the first time unit, and the fourth transmission power is a transmission power of panel 2 for physical channel transmission to TRP2 in the first time unit.

Operations at 701 and operations at 702 can be executed simultaneously. It may be understood that in the embodiment illustrated in FIG. 7, different maximum transmission powers are defined for different panels. The maximum transmission power of each panel may be predefined by a protocol or pre-configured by a network device.

In this disclosure, $P_{CMAX,p,f,c}(i)$ represents the maximum transmission power of each panel, where $p$ represents a panel identifier, and "$p$" may also be replaced with an SRS resource set ID, a beam index, or the like.

For the first PH, the second PH, the third PH, and the fourth PH, reference can be made to the PH calculation under the single-panel M-TRP uplink transmission in R17. For any one of the first transmission power, the second transmission power, the third transmission power, or the fourth transmission power, the transmission power may be an actual transmission power or a virtual transmission power, which depends on a specific situation. If there are multiple repetitions in the first time unit, the transmission power is a transmission power for the first one of PUSCH transmissions. For example, if there are two PUSCH transmissions to TRP1 from panel 1 in the first time unit, then the first transmission power is a transmission power of panel 1 for the first one of PUSCH transmissions to TRP1 in the first time unit.

703, the UE sends control signaling to the network device. Correspondingly, the network device receives the control signaling from the UE. The control signaling contains the first PH, the second PH, the third PH, and the fourth PH.

The control signaling may be an MAC-CE. The MAC-CE contains four PHRs, and each of the four PHRs contains one PH. Alternatively, the MAC-CE contains one PHR, and the one PHR contains the first PH, the second PH, the third PH, and the fourth PH.

Optionally, the first PH, the second PH, the third PH, and the fourth PH in the MAC-CE may be sorted in the order of panel-TRP. If the panel is from small to large and the TRP is from small to large, then the sorting order of the first PH, the second PH, the third PH, and the fourth PH is the first PH, the second PH, the third PH, and the fourth PH in sequence. Alternatively, the first PH, the second PH, the third PH, and the fourth PH may be sorted in the order of TRP-panel. If the TRP is from small to large and the panel is from small to large, then the sorting order of the first PH, the second PH, the third PH, and the fourth PH is the first PH, the third PH, the second PH, and the fourth PH in sequence. Which sorting order to use can be indicated by the network device, or negotiated between the UE and the network device, or predefined by the protocol.

Example 3, based on the example diagram illustrated in FIG. 8, for CC-n: in the first time unit, the first transmission power is an actual transmission power of panel 1 for PUSCH transmission to TRP1, the second transmission power is an actual transmission power of panel 1 for PUSCH transmission to TRP2, the third transmission power is an actual transmission power of panel 2 for PUSCH transmission to TRP1, and the fourth transmission power is an actual transmission power of panel 2 for PUSCH transmission to TRP2.

In the embodiment illustrated in FIG. 7, for the case of simultaneous multi-panel uplink transmission for M-TRPs, the UE determines and reports two PHs, so that the network device can flexibly schedule resources.

By comparing FIG. 7 with FIG. 6, FIG. 6 can save signaling overhead, and the PH reported in FIG. 7 is more accurate.

Reference is made to FIG. 9, where FIG. 9 is a schematic structural diagram of a PH reporting apparatus provided in embodiments of the disclosure. As illustrated in FIG. 9, the PH reporting apparatus 90 includes a processing unit 901 and a communication unit 902.

In an implementation, the processing unit 901 is configured to calculate a first PH according to a first transmission power and a maximum transmission power of the terminal device, and calculate a second PH according to the maximum transmission power and a second transmission power. The communication unit 902 is configured to send control signaling, where the control signaling contains the first PH and the second PH.

Optionally, the first transmission power is a transmission power of a panel p for physical channel transmission to the first TRP in the first time unit, and the second transmission power is a transmission power of the panel p for physical channel transmission to the second TRP in the first time unit. The panel p is the first panel or the second panel.

Optionally, the panel p has a minimum or maximum panel identifier. Alternatively, the panel p is a panel corresponding to a maximum or minimum transmission power for physical channel transmission to the first TRP. Alternatively, the panel p is a panel corresponding to a maximum or minimum transmission power for physical channel transmission to the second TRP.

Optionally, the first transmission power is a sum of a transmission power of the first panel for physical channel transmission to the first TRP in the first time unit and a transmission power of the first panel for physical channel transmission to the second TRP in the first time unit, and the second transmission power is a sum of a transmission power of the second panel for physical channel transmission to the first TRP in the first time unit and a transmission power of the second panel for physical channel transmission to the second TRP in the first time unit. Alternatively, the first transmission power is a sum of a transmission power of the first panel for physical channel transmission to the first TRP in the first time unit and a transmission power of the second panel for physical channel transmission to the first TRP in the first time unit, and the second transmission power is a sum of a transmission power of the first panel for physical channel transmission to the second TRP in the first time unit and a transmission power of the second panel for physical channel transmission to the second TRP in the first time unit.

Optionally, the first transmission power is an actual transmission power or a virtual transmission power, and the second transmission power is the actual transmission power or the virtual transmission power.

In another implementation, the processing unit 901 is configured to calculate a first PH according to a first transmission power and a maximum transmission power of the first panel and calculate a second PH according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit. The processing unit 901 is further configured to calculate a third PH according to a third transmission power and a maximum transmission power of the second panel and calculate a fourth PH according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit. The communication unit 902 is configured to send control signaling, where the control signaling contains the first PH, the second PH, the third PH, and the fourth PH.

Optionally, an identifier of the first panel is less than an identifier of the second panel, and a sorting order of the first PH, the second PH, the third PH, and the fourth PH in the control signaling is the first PH, the second PH, the third PH, and the fourth PH or is the first PH, the third PH, the second PH, and the fourth PH.

Optionally, there are multiple physical channel transmissions to the first TRP from the first panel in the first time unit, and the first transmission power is a transmission power of the first panel for a first one of physical channel transmissions to the first TRP in the first time unit; and/or there are multiple physical channel transmissions to the second TRP from the first panel in the first time unit, and the second transmission power is a transmission power of the first panel for a first one of physical channel transmissions to the second TRP in the first time unit. The same applies to the third transmission power and the fourth transmission power.

Optionally, the first transmission power is an actual transmission power or a virtual transmission power of the first panel for physical channel transmission to the first TRP in the first time unit.

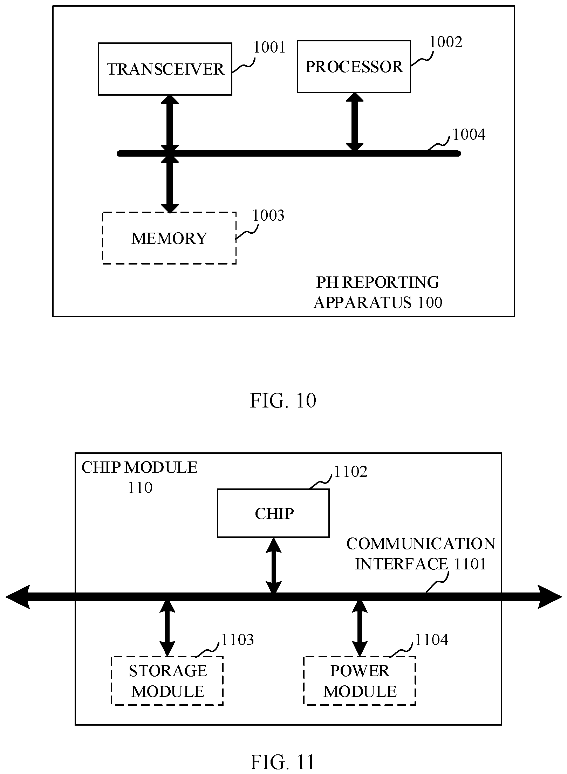

Reference is made to FIG. 10, where FIG. 10 illustrates another PH reporting apparatus 100 provided in embodiments of the disclosure. The apparatus can be configured to implement functions of the UE in the above method embodiments. The PH reporting apparatus 100 may include a transceiver 1001 and a processor 1002. Optionally, the PH reporting apparatus may further include a memory 1003. The transceiver 1001, the processor 1002, and the memory 1003 can be connected through a bus 1004 or in another manner. The bus is represented by a thick line in FIG. 10, and a connection manner between other components is only for illustrative descriptions and is not limited thereto. The bus may be classified into an address bus, a data bus, a control bus, and the like. For the convenience of representation, only one thick line is illustrated in FIG. 10, which, however, does not mean that there is only one bus or one type of bus.

The coupling in embodiments of the disclosure may be an indirect coupling or communication connection through an apparatus, a unit, or a module, and may be in electrical, mechanical, or other forms, for information interaction among the apparatus, the unit or the module. A specific connection medium among the transceiver 1001, the processor 1002, and the memory 1003 is not limited in embodiments of the disclosure.

The memory 1003 may include a read-only memory (ROM) and a random access memory (RAM), and may be configured to provide instructions and data for the processor 1002. A part of the memory 1003 may further include a non-volatile RAM (NVRAM).

The processor 1002 may be a central processing unit (CPU), or may also be another general-purpose processor, a digital signal processor (DSP), an application specific integrated circuit (ASIC), a field programmable gate array (FPGA), or other programmable logic device, a discrete gate or a transistor logic device, a discrete hardware component, etc. The general-purpose processor may be a microprocessor. Optionally, the processor 1002 may also be any conventional processor or the like.

In an optional implementation, the memory 1003 is configured to store program instructions. The processor 1002 is configured to invoke the program instructions stored in the memory 1003, so as to execute operations performed by the UE in the embodiments corresponding to FIG. 6 and FIG. 7.

In embodiments of the disclosure, the method provided in embodiments of the disclosure may be implemented by running a computer program (including program codes) capable of executing various operations involved in the above methods on a general-purpose computing apparatus of, for example, a computer including a processing component and a storage component, such as a CPU, an RAM, and an ROM. The computer program may be recorded, for example, on a computer-readable recording medium, loaded on the above computing apparatus through the computer-readable recording medium, and run on the computing apparatus.

Based on the same inventive concept, the principle for the PH reporting apparatus provided in embodiments of the disclosure to resolve the problems and beneficial effects thereof are similar to the principle for the UE in the method embodiments of the disclosure to resolve the problems and the beneficial effects thereof. Therefore, for the principle and the beneficial effects, reference can be made to the principle and the beneficial effects of the method embodiments, which will not be repeated for the sake of simplicity.

The foregoing PH reporting apparatus may be, for example, a chip or a chip module.

A chip is further provided in embodiments of the disclosure. The chip is configured to execute related operations of the PH reporting apparatus in the foregoing method embodiments.

In an implementation, the chip is configured to calculate a first PH according to a first transmission power and a maximum transmission power of the terminal device, and calculate a second PH according to the maximum transmission power and a second transmission power. The chip is further configured to send control signaling, where the control signaling contains the first PH and the second PH. In another implementation, the chip is configured to calculate a first PH according to a first transmission power and a maximum transmission power of the first panel, and calculate a second PH according to a second transmission power and the maximum transmission power of the first panel, where the first transmission power is a transmission power of the first panel for physical channel transmission to the first TRP in the first time unit, and the second transmission power is a transmission power of the first panel for physical channel transmission to the second TRP in the first time unit. The chip is further configured to calculate a third PH according to a third transmission power and a maximum transmission power of the second panel, and calculate a fourth PH according to a fourth transmission power and the maximum transmission power of the second panel, where the third transmission power is a transmission power of the second panel for physical channel transmission to the third TRP in the first time unit, and the fourth transmission power is a transmission power of the second panel for physical channel transmission to the fourth TRP in the first time unit. The chip is further configured to send control signaling, where the control signaling contains the first PH, the second PH, the third PH, and the fourth PH.

Reference is made to FIG. 11, where FIG. 11 is a schematic structural diagram of a chip module provided in embodiments of the disclosure. The chip module 110 is configured to execute related operations of the UE in the foregoing method embodiments. The chip module 110 includes a communication interface 1101 and a chip 1102.

The communication interface is configured for internal communication within the chip module or configured for communication between the chip module and an external device. The chip is configured to implement functions of the UE in embodiments of the disclosure. For specifics, reference can be made to the embodiments corresponding to FIG. 6 and FIG. 7. Optionally, the chip module 110 may further include a storage module 1103 and a power module 1104. The storage module 1103 is configured to store data and instructions. The power module 1104 is configured to supply power to the chip module.

For each apparatus and product applied to or integrated into the chip module, each module included can be implemented by hardware such as circuits, and different modules can be located in the same component (such as a chip, a circuit module, and the like) or different components of the chip module. Alternatively, at least part of modules can be implemented by software programs that run on the processor integrated into the chip module, and the rest (if any) of modules can be implemented by hardware such as circuits.

A computer-readable storage medium is further provided in embodiments of the disclosure. The computer-readable storage medium is configured to store one or more instructions. The one or more instructions, which are loaded and executed by the processor, are operable to implement the method provided in the above method embodiments.

A computer program product containing computer programs or instructions is further provided in embodiments of the disclosure. When executed by a computer, the computer programs or instructions cause the computer to implement the method provided in the above method embodiments.

For each apparatus and product described in the embodiments above, each module/unit included may be a software module/unit, a hardware module/unit, or may be partially a software module/unit and partially a hardware module/unit. For example, for each apparatus and product applied to or integrated into the chip, each module/unit included can be implemented by hardware such as circuits, or at least part of modules/units can be implemented by software programs that run on a processor integrated into the chip, and the rest (if any) of modules/units can be implemented by hardware such as circuits. For each apparatus and product applied to or integrated into the chip module, each module/unit included can be implemented by hardware such as circuit, and different modules/units can be located in the same component (such as a chip, a circuit module, and the like) or different components of the chip module. Alternatively, at least part of modules/units can be implemented by software programs that run on the processor integrated into the chip module, and the rest (if any) of modules/units can be implemented by hardware such as circuits. For each apparatus and product applied to or integrated into the UE, each module/unit included can be implemented by hardware such as circuits, and different modules/units can be located in the same component (such as a chip, a circuit module, and the like) or different components in the UE. Alternatively, at least part of modules/units can be implemented by software programs that run on the processor integrated into the UE, and the rest (if any) of modules/units can be implemented by hardware such as circuits.

It may be noted that, for the sake of simplicity, the foregoing method embodiments are referred to as a series of action combinations. However, it will be appreciated by those skilled in the art that this disclosure is not limited by the sequence of actions described. According to this disclosure, some operations may be performed in other orders or simultaneously. Besides, it will be appreciated by those skilled in the art that the embodiments described in the specification are exemplary embodiments, and the actions and modules involved are not necessarily essential to the disclosure.

A sequence of the operations in the method embodiments of the disclosure may be adjusted, and certain operations may also be merged or removed according to an actual need.

The modules in the apparatus embodiments of the disclosure may be merged, divided, and removed according to an actual need.

It will be understood by those of ordinary skill in the art that all or part of the operations of the various methods in the embodiments described above may be accomplished by means of a program to instruct associated hardware, and the program may be stored in a computer-readable storage medium, which may include a flash disk, an ROM, an RAM, a magnetic disk, or an optical disk.

What is disclosed above is merely an exemplary embodiment of the disclosure, is merely a part of embodiments of the disclosure, and is not intended to limit the scope of the claims of this disclosure.

Claims

1. A power headroom (PH) reporting method applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in a second time unit is intended for the first TRP and/or the second TRP, and the method comprises:

calculating a first PH according to a first transmission power and a maximum transmission power of the terminal device, and calculating a second PH according to the maximum transmission power and a second transmission power; and
sending control signaling, wherein the control signaling contains the first PH and the second PH.

2. The method of claim 1, wherein the first transmission power is a transmission power of a panel p for physical channel transmission to the first TRP in the first time unit, and the second transmission power is a transmission power of the panel p for physical channel transmission to the second TRP in the first time unit, wherein the panel p is the first panel or the second panel.

3. The method of claim 1, wherein the first transmission power is a transmission power of a panel p for uplink sounding reference signal (SRS) transmission to the first TRP in the first time unit, and the second transmission power is a transmission power of the panel p for uplink SRS transmission to the second TRP in the first time unit, wherein the panel p is the first panel or the second panel.

4. The method of claim 2, wherein

the panel p has a minimum or maximum panel identifier; or
the panel p is a panel corresponding to a maximum or minimum transmission power for physical channel transmission to the first TRP; or
the panel p is a panel corresponding to a maximum or minimum transmission power for physical channel transmission to the second TRP.

5. The method of claim 2, wherein the panel p is a specified panel.

6. The method of claim 1, wherein

the first transmission power is a sum of a transmission power of the first panel for physical channel transmission to the first TRP in the first time unit and a transmission power of the first panel for physical channel transmission to the second TRP in the first time unit, and the second transmission power is a sum of a transmission power of the second panel for physical channel transmission to the first TRP in the first time unit and a transmission power of the second panel for physical channel transmission to the second TRP in the first time unit; or
the first transmission power is a sum of a transmission power of the first panel for physical channel transmission to the first TRP in the first time unit and a transmission power of the second panel for physical channel transmission to the first TRP in the first time unit, and the second transmission power is a sum of a transmission power of the first panel for physical channel transmission to the second TRP in the first time unit and a transmission power of the second panel for physical channel transmission to the second TRP in the first time unit.

7. The method of any one of claims 1 to 6, wherein the first transmission power is an actual transmission power or a virtual transmission power, and the second transmission power is the actual transmission power or the virtual transmission power.

8. The method of any one of claims 1 to 6, further comprising:
determining, according to a transmission state between the first panel or the second panel and the first TRP or the second TRP, that the first transmission power is an actual transmission power or a virtual transmission power and the second transmission power is the actual transmission power or the virtual transmission power.

9. The method of any one of claims 1 to 6, wherein the control signaling is a media access control-control element (MAC-CE), wherein

the MAC-CE contains two PH reports (PHRs), one of the two PHRs contains the first PH, and the other one of the two PHRs contains the second PH; or
the MAC-CE contains one PHR, and the one PHR contains the first PH and the second PH.

10. A power headroom (PH) reporting method applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the method comprises:

calculating a first PH according to a first transmission power and a maximum transmission power of the first panel, and calculating a second PH according to a second transmission power and the maximum transmission power of the first panel, wherein the first transmission power is a transmission power of the first panel for physical channel transmission to the first TRP in the first time unit, and the second transmission power is a transmission power of the first panel for physical channel transmission to the second TRP in the first time unit;
calculating a third PH according to a third transmission power and a maximum transmission power of the second panel, and calculating a fourth PH according to a fourth transmission power and the maximum transmission power of the second panel, wherein the third transmission power is a transmission power of the second panel for physical channel transmission to the first TRP in the first time unit, and the fourth transmission power is a transmission power of the second panel for physical channel transmission to the second TRP in the first time unit; and
sending control signaling, wherein the control signaling contains the first PH, the second PH, the third PH, and the fourth PH.

11. The method of claim 10, wherein an identifier of the first panel is less than an identifier of the second panel, and a sorting order of the first PH, the second PH, the third PH, and the fourth PH in the control signaling is the first PH, the second PH, the third PH, and the fourth PH or is the first PH, the third PH, the second PH, and the fourth PH.

**12.** The method of claim 10, wherein

there are a plurality of physical channel transmissions to the first TRP from the first panel in the first time unit, and the first transmission power is a transmission power of the first panel for a first one of physical channel transmissions to the first TRP in the first time unit; and/or there are a plurality of physical channel transmissions to the second TRP from the first panel in the first time unit, and the second transmission power is a transmission power of the first panel for a first one of physical channel transmissions to the second TRP in the first time unit.

**13.** The method of any one of claims 10 to 12, wherein the first transmission power is an actual transmission power or a virtual transmission power of the first panel for physical channel transmission to the first TRP in the first time unit.

**14.** The method of any one of claims 10 to 12, wherein the control signaling is a media access control-control element (MAC-CE), wherein

the MAC-CE contains four PH reports (PHRs), and each of the four PHRs contains one PH; or the MAC-CE contains one PHR, and the one PHR contains the first PH, the second PH, the third PH, and the fourth PH.

**15.** A power headroom (PH) reporting apparatus applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the apparatus comprises:

a processing unit configured to calculate a first PH according to a first transmission power and a maximum transmission power of the terminal device, and calculate a second PH according to the maximum transmission power and a second transmission power; and a communication unit configured to send control signaling, wherein the control signaling contains the first PH and the second PH.

**16.** A power headroom (PH) reporting apparatus applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the apparatus comprises:

a processing unit configured to calculate a first PH according to a first transmission power and a maximum transmission power of the first panel and calculate a second PH according to a second transmission power and the maximum transmission power of the first panel, wherein the first transmission power is a transmission power of the first panel for physical channel transmission to the first TRP in the first time unit, and the second transmission power is a transmission power of the first panel for physical channel transmission to the second TRP in the first time unit; and calculate a third PH according to a third transmission power and a maximum transmission power of the second panel and calculate a fourth PH according to a fourth transmission power and the maximum transmission power of the second panel, wherein the third transmission power is a transmission power of the second panel for physical channel transmission to the first TRP in the first time unit, and the fourth transmission power is a transmission power of the second panel for physical channel transmission to the second TRP in the first time unit; and a communication unit configured to send control signaling, wherein the control signaling contains the first PH, the second PH, the third PH, and the fourth PH.

**17.** A chip applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the chip is configured to:

calculate a first PH according to a first transmission power and a maximum transmission power of the terminal device, and calculate a second PH according to the maximum transmission power and a second transmission power; and

send control signaling, wherein the control signaling contains the first PH and the second PH.

18. A chip applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the chip is configured to:

calculate a first PH according to a first transmission power and a maximum transmission power of the first panel, and calculate a second PH according to a second transmission power and the maximum transmission power of the first panel, wherein the first transmission power is a transmission power of the first panel for physical channel transmission to the first TRP in the first time unit, and the second transmission power is a transmission power of the first panel for physical channel transmission to the second TRP in the first time unit;

calculate a third PH according to a third transmission power and a maximum transmission power of the second panel, and calculate a fourth PH according to a fourth transmission power and the maximum transmission power of the second panel, wherein the third transmission power is a transmission power of the second panel for physical channel transmission to the first TRP in the first time unit, and the fourth transmission power is a transmission power of the second panel for physical channel transmission to the second TRP in the first time unit; and

send control signaling, wherein the control signaling contains the first PH, the second PH, the third PH, and the fourth PH.

19. A module device applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the module device comprises:

a power module configured to supply power to the module device;

a storage module configured to store data and instructions;

a communication module configured for internal communication within the module device or configured for communication between the module device and an external device; and

a chip module configured to calculate a first PH according to a first transmission power and a maximum transmission power of the terminal device and calculate a second PH according to the maximum transmission power and a second transmission power; and send control signaling through the communication module, wherein the control signaling contains the first PH and the second PH.

20. A module device applied to a terminal device, wherein the terminal device has a first panel and a second panel, the first panel and the second panel are capable of simultaneous uplink transmission in a first time unit, the uplink transmission of the first panel in the first time unit is intended for a first transmission and reception point (TRP) and/or a second TRP, the uplink transmission of the second panel in the first time unit is intended for the first TRP and/or the second TRP, and the module device comprises:

a power module configured to supply power to the module device;

a storage module configured to store data and instructions;

a communication module configured for internal communication within the module device or configured for communication between the module device and an external device; and

a chip module configured to calculate a first PH according to a first transmission power and a maximum transmission power of the first panel and calculate a second PH according to a second transmission power and the maximum transmission power of the first panel, wherein the first transmission power is a transmission power of the first panel for physical channel transmission to the first TRP in the first time unit, and the second transmission power is a transmission power of the first panel for physical channel transmission to the second TRP in the first time unit; calculate a third PH according to a third transmission power and a maximum transmission power of the second panel and calculate a fourth PH according to a fourth transmission power and the maximum transmission power of the second panel, wherein the third transmission power is a transmission power of the second panel for physical channel transmission to the first TRP in the first time unit, and the fourth transmission power is a transmission power of the second panel for physical channel transmission to the second TRP in the first time unit; and send control signaling, wherein the control signaling contains the first PH, the second PH, the third PH, and the fourth PH.

21. A computer-readable storage medium configured to store a computer program which, when executed by a communication apparatus, is operable with the communication apparatus to implement the method of any one of claims 1 to 14.

FIG. 1

FIG. 2

FIG. 3

FIG. 4

FIG. 5

UE

NETWORK DEVICE

601, CALCULATE FIRST PH ACCORDING TO FIRST TRANSMISSION POWER AND MAXIMUM TRANSMISSION POWER OF UE, AND CALCULATE SECOND PH ACCORDING TO SECOND TRANSMISSION POWER AND MAXIMUM TRANSMISSION POWER OF UE

602, CONTROL SIGNALING (FIRST PH AND SECOND PH)

FIG. 6

```
┌──────────────────┐                              ┌──────────────┐
│                  │                              │   NETWORK    │
│       UE         │                              │   DEVICE     │
└──────────────────┘                              └──────────────┘
```

701, CALCULATE FIRST PH ACCORDING TO FIRST
TRANSMISSION POWER AND MAXIMUM TRANSMISSION
POWER OF PANEL 1, AND CALCULATE SECOND PH
ACCORDING TO SECOND TRANSMISSION POWER AND
MAXIMUM TRANSMISSION POWER OF PANEL 1

702, CALCULATE THIRD PH ACCORDING TO THIRD
TRANSMISSION POWER AND MAXIMUM TRANSMISSION
POWER OF PANEL 2, AND CALCULATE FOURTH PH
ACCORDING TO FOURTH TRANSMISSION POWER AND
MAXIMUM TRANSMISSION POWER OF PANEL 2

703, CONTROL SIGNALING (FIRST
PH, SECOND PH, THIRD PH, AND
FOURTH PH)

FIG. 7

| PANEL-2 PUSCH | PANEL-2 PUSCH | PANEL-2 PUSCH | PANEL-2 PUSCH |
|---|---|---|---|

CC-n

| PANEL-1 PUSCH | PANEL-1 PUSCH | PANEL-1 PUSCH | PANEL-1 PUSCH |
|---|---|---|---|

FIRST TIME UNIT

FIG. 8

PH REPORTING APPARATUS 90

901

902

| PROCESSING UNIT | COMMUNICATION UNIT |
|---|---|

FIG. 9

TRANSCEIVER 1001

PROCESSOR 1002

1004

MEMORY 1003

PH REPORTING
APPARATUS 100

FIG. 10

CHIP MODULE
110

CHIP 1102

COMMUNICATION
INTERFACE 1101

STORAGE
MODULE 1103

POWER
MODULE 1104

FIG. 11

## INTERNATIONAL SEARCH REPORT

International application No.

**PCT/CN2023/075462**

| A. | CLASSIFICATION OF SUBJECT MATTER |
|---|---|

H04W72/12(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, WPABS, USTXT, EPTXT, WOTXT, CNKI, 3GPP: 差值, 余量, 第二, 多, 至少一个, 功率, 面板, 同时, 传输, PANEL, plurality, TRP, POWER HEADROOM, multiple

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 113302987 A (LENOVO (SINGAPORE) PTE. LTD.) 24 August 2021 (2021-08-24) claims 1-13, and description, paragraphs [0014]-[0018] and [0047]-[0155] | 1-21 |
| X | US 2021045070 A1 (YI YUNJUNG et al.) 11 February 2021 (2021-02-11) description, paragraphs [0339]-[0437] | 1-21 |
| A | WO 2021237457 A1 (QUALCOMM INC. et al.) 02 December 2021 (2021-12-02) entire document | 1-21 |

☐ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 May 2023 | 08 May 2023 |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/075462** |

| Patent document cited in search report | | | Publication date (day/month/year) | Patent family member(s) | | | Publication date (day/month/year) |
| --- | --- | --- | --- | --- | --- | --- | --- |
| CN | 113302987 | A | 24 August 2021 | US | 2021168726 | A1 | 03 June 2021 |
| | | | | US | 11350370 | B2 | 31 May 2022 |
| | | | | US | 2022295415 | A1 | 15 September 2022 |
| | | | | EP | 3909312 | A1 | 17 November 2021 |
| | | | | WO | 2020144540 | A1 | 16 July 2020 |
| | | | | US | 2020229104 | A1 | 16 July 2020 |
| | | | | US | 10945216 | B2 | 09 March 2021 |
| US | 2021045070 | A1 | 11 February 2021 | US | 11477740 | B2 | 18 October 2022 |
| | | | | US | 2023041866 | A1 | 09 February 2023 |
| WO | 2021237457 | A1 | 02 December 2021 | None | | | |

Form PCT/ISA/210 (patent family annex) (July 2022)